# EUROPÄISCHE PATENTSCHRIFT

(11) **EP 1 766 354 B1**
(45) Veröffentlichungstag und Bekanntmachung des Hinweises auf die Patenterteilung: **01.11.2017**
(21) Anmeldenummer: 05748460.2
(22) Anmeldetag: 08.06.2005
(51) Int. Cl.: G01J 5/06, G01J 5/16

(54) **SENSORELEMENT**
SENSOR ELEMENT
ELEMENT CAPTEUR

(30) Priorität: 09.06.2004 DE 102004028032
(43) Veröffentlichungstag der Anmeldung: 28.03.2007
(73) Patentinhaber: Excelitas Technologies Singapore Pte Ltd., Singapore 138628 (SG)
(72) Erfinder: ERNST, Henrik, 56368 Katzenelnbogen (DE); KARAGÖZOGLU, Hermann, 65205 Wiesbaden (DE); HAUSNER, Martin, 65193 Wiesbaden (DE); LAUCK, Guido, 65439 Flörsheim (DE); SCHILZ, Jürgen, 65527 Niedernhausen (DE)
(74) Vertreter: Beetz & Partner mbB
(86) Internationale Anmeldenummer: PCT/EP2005/006159
(87) Internationale Veröffentlichungsnummer: WO 2005/121728

(56) Entgegenhaltungen:
- WO-A-91/03204
- DE-A1- 3 925 391
- DE-A1- 19 710 946
- US-A- 5 626 139
- LIU YUEYING ET AL: "The design of adding beat reflective emitter coatings on the cold region of infrared thermopiles" THERMOELECTRICS, 2002. PROCEEDINGS ICT '02. TWENTY-FIRST INTERNATIONAL CONFERENCE ON AUG. 25-29, 2002, PISCATAWAY, NJ, USA,IEEE, 25. August 2002 (2002-08-25), Seiten 458-462, XP010637525 ISBN: 0-7803-7683-8

## Beschreibung

Die Erfindung betrifft ein Sensorelement nach den Oberbegriffen der unabhängigen Patentansprüche. Sie betrifft insbesondere Infrarotdetektoren mit verbessertem Verhalten bei Schwankungen der Umgebungstemperatur. Solche Sensorelemente und Sensoren sind aus der DE 197 10 946 und aus der EP 1 039 280 bekannt.

Insbesondere betrifft die Erfindung Strahlungssensoren, und vorzugsweise hierbei solche, die der Temperaturmessung mittels Infrarotstrahlungsmessung dienen. Die eigentlichen Sensorelemente sind dabei diejenigen Strukturen, auf die konkret die zu messende Infrarotstrahlung einfällt und die diese in bestimmter Weise in elektrisch verwertbare Signale, beispielsweise Strom, Spannung, Ladung, umsetzen. Es kann sich hierbei um Thermopiles oder auch um Pyrodetektoren oder Bolometer handeln.

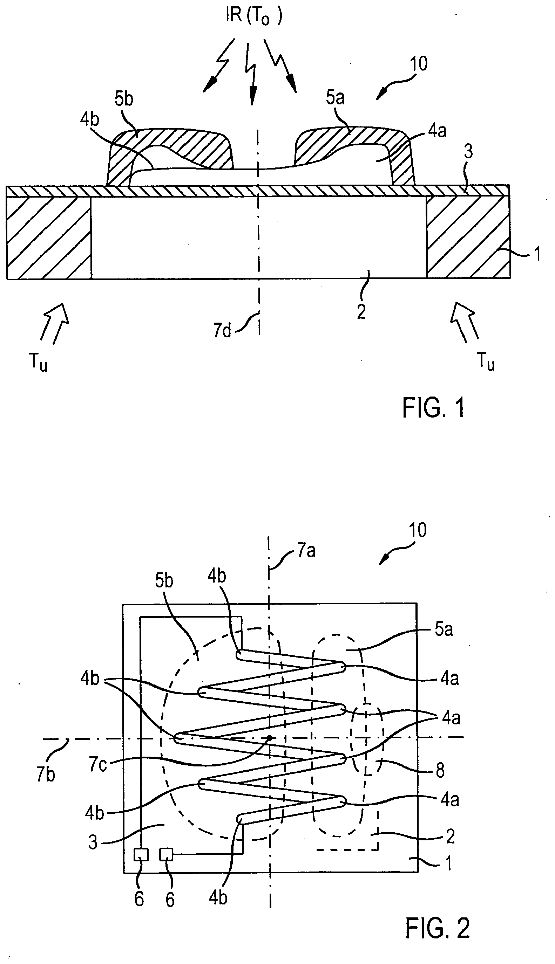

Insbesondere Thermopiles haben die Eigenschaft, dass ihr elektrisches Ausgangssignal nicht nur von der auf sie einfallenden elektromagnetischen Strahlung (im Infrarotbereich) abhängt, sondern auch von der Umgebungstemperatur, in der das Sensorelement arbeitet. Um die Sensorelemente von Wärmesenken und von der Umgebungstemperatur weitestmöglich abzukoppeln, werden Thermopiles auf thermisch schlecht leitenden Strukturen aufgebaut, wie sie beispielsweise in Fig. 1 gezeigt sind. Das eigentliche Sensorelement ist durch die Bezugsziffern 4 (4a, 4b) bezeichnet. Es weist ein warmes Ende 4a und ein kaltes Ende 4b auf. Über dem warmen Ende 4a kann eine Absorptionsschicht 5a liegen, die beispielsweise dunkel gefärbt ist, sodass in ihr die einfallende Infrarotstrahlung (symbolisiert durch IR(To)) besonders stark absorbiert wird und so zu einer Erwärmung des warmen Endes 4a führt. Es kann andererseits über dem kalten Ende 4b eine Reflexionsschicht 5b liegen, die die einfallende Infrarotstrahlung reflektiert, sodass sich das kalte Ende 4b entsprechend weniger erwärmt. Aus dem Temperaturunterschied zwischen kaltem und warmem Ende ergibt sich eine abgreifbare Spannungsdifferenz. Mehrere dieser Strukturen können in Serie geschaltet sein, sodass sich dementsprechend eine höhere Signalspannung ergibt.

Die Sensorelemente liegen auf einer dünnen Membran 3, die ihrerseits von einem als Rahmen ausgebildeten Träger 1 getragen wird. Die warmen Enden 4a liegen dabei regelmäßig nicht über dem Rahmen 1, sondern auf der Membran 3 über der Öffnung 2 des Rahmens 1. Dadurch ist das warme Ende 4a von der thermischen Masse des Rahmens 1 thermisch entkoppelt, sodass die einfallende Infrarotstrahlung eine vergleichsweise hohe Erwärmung und damit ein hohes Signal bewirken kann.

Wenn davon ausgegangen werden kann, dass die Umgebungstemperatur (symbolisiert durch Pfeile Tu unter dem Rahmen 1 des Sensorelements) konstant ist, ist es wünschenswert, die kalten Kontakte 4b über dem Rahmen 1 und, wenn und soweit dort vorhanden, auf der Membran 3, vorzusehen. Dann ist eine Erwärmung der kalten Kontakte durch die einfallende Infrarotstrahlung gering, da die kalten Kontakte mit der thermischen Masse des Rahmens 1 gekoppelt sind.

Wenn andererseits davon auszugehen ist, dass sich die Umgebungstemperatur schnell ändern kann, ist es vorzuziehen, die kalten Kontakte wie die warmen Kontakt nicht über dem Rahmen 1 vorzusehen, sondern - wie in Fig. 1 gezeigt - über der Öffnung 2 im Rahmen 1, sodass insoweit auch eine Entkopplung der kalten Kontakte von der sich ändernden Umgebungstemperatur erfolgt. Ein typisches Einsatzgebiet für Sensorelemente bzw. Sensoren bei sich ändernder Umgebungstemperatur ist das Gebiet der mittelbaren Temperaturmessung über IR-Strahlung des zu messenden Objekts, bspw. in der Klimatechnik.

Wenn die Temperaturverhältnisse des kalten Kontakts undefiniert sind oder sich ändern, leidet darunter die (mittelbare) Temperaturmessung über die (unmittelbare) Messung der Infrarotstrahlung, die nach Maßgabe einer Objekttemperatur To erzeugt wird. So wird z. B. bei manchen Temperatursensoranwendungen deshalb der kalte Kontakt auch über der Öffnung 2 auf der Membran 3 vorgesehen.

Zur genauen Temperaturmessung sind die dynamischen Eigenschaften der Temperaturverteilung relevant. Hierzu schlägt die DE 197 10 946 vor, die Wärmekapazitäten der Kaltstellen und der Warmstellen sowie die Wärmeleitfähigkeit in der Umgebung der Kaltstellen und der Warmstellen in bestimmter, näher ausgeführter Weise auszugestalten. Eine unsymmetrische Anordnung der Warmstellen des Thermopile-Sensors bezüglich des Gehäuses wird vorgeschlagen, um lediglich die Bestrahlung der Warmstellen zu erreichen. Durch die aus der genannten Druckschrift bekannten Maßnahmen soll erreicht werden, dass die Beeinflussung der Kaltstellen durch den Umgebungstemperaturgang die gleiche ist wie diejenige der Warmstellen.

Der Aufsatz "The design of adding heat reflective emitter coatings ..." von Liu Yueying et al. in "21st International Conference on Thermoelectronics (2002)", Seiten 458 ff., beschreibt einen IR-Thermopile mit einer Membran und zusätzlichen metallischen, reflektierenden Schichten. Die reflektierenden Schichten erhöhen die Empfindlichkeit und Detektionsfähigkeit des Sensors, indem sie Wärme reflektieren und Wärme, die in den kalten Bereichen absorbiert wurde, an die umgebende Luft abgeben.

Die DE 197 10 946 A1 beschreibt einen Thermopile-Sensor. Die Wärmekapazität der Kalt- und Warmstellen des Thermopiles samt ihrer Halterung und die Wärmeleitfähigkeit der Halterung sind so aufeinander abgestimmt, dass eine Änderung der Temperatur des Gehäuses zu einer gleich großen Temperaturänderung der Kalt- und Warmstellen führt.

Die DE 39 25 391 A1 beschreibt eine Thermosäule, deren Thermoelemente auf einem aus Silizium bestehenden Chip ausgebildet sind, wobei der Chip mit mikromechanischen Verfahren hergestellt wird. Von einem ursprünglich relativ dicken, plattenförmigen, aus Silizium bestehenden Chip wird derart viel Material abgetragen, dass neben einem relativ dicken Rand nur noch ein relativ dünnes Band bestehenbleibt, welches nur mit seinem ersten Ende an den Rand angelenkt ist.

Die WO 91/03204 beschreibt ein CO₂-Messgerät. Es werden Paarungen gefilterter Thermopiles seriell vorgesehen. Das sich ergebende Differenzsignal wird weiterverarbeitet.

US 5 626 139 beschreibt ein Ohrthermometer mit Doppel-Thermopiles, von denen jedes mehrere Erfassungsübergänge und mehrere Referenzübergänge aufweist.

Aufgabe der Erfindung ist es, ein Sensorelement und einen Sensor anzugeben, die gegen Änderungen der Umgebungstemperatur des Sensors bzw. des Sensorelements und allgemein gegen störende Signalquellen vergleichsweise unempfindlich sind.

Diese Aufgabe wird mit den Merkmalen des unabhängigen Patentanspruchs gelöst. Abhängige Patentansprüche sind auf bevorzugte Ausführungsformen der Erfindung gerichtet.

Ein Sensorelement nach der Erfindung, vorzugsweise ein Thermopile, dient der Erfassung elektromagnetischer Strahlung insbesondere im IR-Bereich (λ > 800 nm, vorzugsweise > 2 µm, vorzugsweise < 25 µm) und weist einen oder mehrere wärmeempfindliche Bereiche auf, die auf einem Träger angeordnet sind. Darüber hinaus sind Beeinflussungsschichten vorgesehen, um die Absorption und/oder Reflexion der zu erfassenden elektromagnetischen Strahlung an den und in der Nähe der wärmeempfindlichen Bereiche zu beeinflussen. Die Anordnung der wärmeempfindlichen Bereiche auf dem Träger erfolgt auch nach Maßgabe thermischer Eigenschaften einer oder mehrerer der Beeinflussungsschichten. Die betrachteten thermischen Eigenschaften der Beeinflussungsschichten können Wärmeleitfähigkeit, Wärmekapazität, Strahlungsabsorptionsvermögen, Strahlungsreflexionsvermögen und Strahlungsemissionsvermögen sein.

Soweit die wärmeempfindlichen Bereiche Strahlung absorbieren und sich dadurch erwärmen, können sie als strahlungsempfindliche Bereiche angesehen werden. Bereiche, die Strahlung, insbesondere IR-Strahlung, unmittelbar und ohne thermischen Effekt in eine elektrische Größe umwandeln, können zu wärmeempfindlichen Bereichen als äquivalent angesehen werden.

In einem Sensorelement der Erfindung können die wärmeempfindlichen Bereiche des Sensorelements, insbesondere Warmstellen und/oder Kaltstellen einer Thermopile-Struktur, unsymmetrisch bezüglich einer Symmetrieachse oder eines Symmetriepunkts des Sensorelements und insbesondere des Trägers oder eines Teils davon, beispielsweise des Rahmens oder der Membran, auf dem Träger angeordnet sein. Die Unsymmetrie der Anordnung dient dabei dem Ausgleich unsymmetrischer thermischer Eigenschaften, wobei hier auch die Eigenschaften der Beeinflussungsschichten wie oben genannt berücksichtigt werden können.

Ein Sensorelement nach der Erfindung kann wie eben beschrieben aufgebaut sein. Es weist jedenfalls wärmeempfindliche Bereiche und Beeinflussungsschichten zur Beeinflussung der Absorption und/oder Reflexion der zu erfassenden elektromagnetischen Strahlung auf. Die Anordnung, Formgebung und Dicke der Beeinflussungsschichten kann nach Maßgabe von thermischen Eigenschaften des Sensorelements bzw. von Komponenten hiervon (Träger, Rahmen, Membran, wärmeempfindliche Bereiche) erfolgen.

Ein Sensorelement nach der Erfindung kann wie eben beschrieben aufgebaut sein. Es dient der Erfassung elektromagnetischer Strahlung insbesondere im IR-Bereich und hat eine oder mehrere erste Regionen auf einem Träger, die der Erzeugung eines elektrischen Ausgangssignals entsprechend der zu erfassenden elektromagnetischen Strahlung dienen, und einer oder mehreren zweiten Regionen, die für die zu erfassende elektromagnetische Strahlung unempfindlicher als die ersten Region(en) ist bzw. sind und ihr elektrisches Ausgangssignal mit demjenigen der ersten Region(en) verknüpft wird. Vorzugsweise liefern die zweiten Regionen kein wärmeabhängiges Signal, sondern nur ein der Umgebungstemperatur entsprechendes Signal, das wenigstens qualitativ bzw. bereichsweise so verlaufen kann wie die temperaturabhängige Signalkomponente aus den ersten Regionen. Die Signale aus den ersten und den zweiten Regionen können im Gegentakt geschaltet sein, so dass sich eine Signalsumme ergibt, in der der Temperaturgang zumindest teilweise heraussubtrahiert wurde, während der Strahlungsgang des Signals erhalten bleibt. Auf diese Weise kann der Temperaturgang unmittelbar auf dem Sensorelement analog elektrisch kompensiert werden.

Nachfolgend werden Bezug nehmend auf die beiliegenden Zeichnungen einzelne Ausführungsformen der Erfindung beschrieben, es zeigen:
Fig. 1 den Querschnitt durch ein Sensorelement,
Fig. 2 die Draufsicht auf ein erfindungsgemäßes Sensorelement,
Fig. 3A und B die Draufsicht auf ein weiteres erfindungsgemäßes Sensorelement.

Fig. 1 zeigt ein Sensorelement, in dem die Erfindung angewendet werden kann. Das Sensorelement 10 weist ein Thermopile auf, das die Serienschaltung mehrerer kalter und warmer Kontakte aufweisen kann. Die kalten Kontakte sind mit 4b bezeichnet, die warmen mit 4a. Über den warmen Kontakten 4a kann eine Absorptionsschicht 5a liegen, über den kalten Kontakten 4b kann eine Reflexionsschicht 5b liegen. Die Absorptionsschicht 5a bewirkt die Absorption von Infrarotstrahlung IR(To), die nach Maßgabe der Objekttemperatur To des Objekts entsteht und ausgestrahlt wird. Die Reflexionsschicht 5b reflektiert die Strahlung. Auf diese Weise wird am warmen Ende 4a die Erwärmung aufgrund der einfallenden Strahlung gefördert, während sie am kalten Ende unterdrückt wird. Sowohl warmes als auch kaltes Ende liegen über der Öffnung 2 des Rahmens 1 auf einer Membran 3, die die Öffnung 2 überspannt. Die Querabmessung des in Fig. 1 gezeigten Sensorelements kann einige wenige Millimeter betragen. Die Höhe des Rahmens kann einige hundert Mikrometer sein. Ganz allgemein werden zunächst einzelne Sensorelemente beschrieben.

Die Erfindung kann aber auch bei Mehrelementsensoren angewendet werden, also bei solchen Sensoren, die mehrere Sensorelemente aufweisen und räumlich nahe beieinander angeordnet sind, um eine Ortsauflösung in Verbindung mit einem Abbildungselement zu bewirken. Die Öffnungen 2 des Rahmens 1 sind üblicherweise geradlinig begrenzt (in der Draufsicht, siehe Fig. 2, die Ecke unten rechts). Die Öffnung 2 kann rechteckig oder quadratisch ausgebildet sein. Es können aber auch runde oder ovale Öffnungen Gegenstand der Erfindung sein. 7d symbolisiert eine Symmetrieachse des Sensorelements. Es kann die Symmetrieachse der Öffnung 2 sein. Die Symmetrie kann eine Drehsymmetrie sein (beispielsweise alle 90°) oder auch eine Spiegelsymmetrie (links/rechts).

Fig. 2 zeigt die Anordnung der kalten und warmen Kontaktstellen eines Thermopiles bzw. allgemein der wärmeempfindlichen Bereiche 4a, 4b des Sensorelements. Man sieht, dass sie nicht symmetrisch zu Symmetrieachsen 7a, 7b oder Symmetriepunkten 7c ausgebildet sind. Diese unsymmetrische Anordnung dient dem Ausgleich unsymmetrischer thermischer Eigenschaften allgemein des Sensorelements und insbesondere der Beeinflussungsschichten 5a, 5b, hier insbesondere die Wärmeleitfähigkeit: Eine Reflexionsschicht 5b kann eine dünne Aluminiumschicht sein, die gleichwohl eine vergleichsweise hohe thermische Leitfähigkeit hat, sodass thermische "Schocks" wegen sich ändernder Umgebungstemperatur vergleichsweise schnell bei den kalten Kontakten "ankommen".

Im Gegensatz hierzu haben Absorptionsschichten 5a eine vergleichsweise niedrige Wärmeleitfähigkeit, sodass Temperaturänderungen wegen geänderter Umgebungstemperatur vergleichsweise langsam bei den warmen Kontakten ankommen. Diese Unsymmetrie, die sich bei dynamischem Temperaturverhalten der Umgebungstemperatur auswirkt, kann durch unsymmetrische Anordnung der kalten bzw. warmen Kontakte ausgeglichen werden. In Fig. 2a sind beispielsweise die kalten Kontakte 4b unter der Reflexionsschicht 5b nicht in gleichem Abstand zum Rahmen 1 des Trägers angebracht wie die warmen Kontakte 4a. Allgemein ausgedrückt können die kalten Kontakte in größerem mittleren Abstand vom Rahmen 1 auf der Membran 3 angebracht sein als die warmen Kontakte 4a. Durch den größeren Abstand vom die Umgebungstemperatur heranführenden Rahmen 1 wird die bessere Wärmeleitung der Reflexionsschicht kompensiert.

Anders ausgedrückt werden die wärmeempfindlichen Bereiche nach Maßgabe thermischer Eigenschaften des Sensorelements, insbesondere dynamischer thermischer Eigenschaften, und insbesondere des Rahmens und/oder der Membran und/oder der Beeinflussungsschichten und/ oder der wärmeempfindlichen Bereiche selbst auf dem Träger angeordnet. Die betrachteten thermischen Eigenschaften können Wärmeleitfähigkeit, Wärmekapazität, Strahlungsabsorptionsvermögen, Strahlungsreflexionsvermögen, Strahlungsemissionsvermögen sein. Insbesondere werden die Wärmeleitfähigkeit und die Wärmekapazität der Beeinflussungsschichten berücksichtigt.

Vom Ergebnis her kann dies dazu führen, dass der mittlere Abstand von wärmeempfindlichen Bereichen unter Reflexionsschichten zum Rahmen 1 größer ist als der mittlere Abstand von wärmeempfindlichen Bereichen unter Absorptionsschichten zum Rahmen 1.

Die Anordnung der wärmeempfindlichen Bereiche kann so sein, dass sie sich auf Isothermen befinden, die sich bei dynamischen Vorgängen einstellen. Diese Isothermen können beispielsweise durch numerische Simulation (etwa durch eine finite Elemente-Methode) bestimmt werden. Auf diesen Isothermen können dann die einzelnen wärmeempfindlichen Bereiche positioniert werden. Dies hat zur Konsequenz, dass sowohl warme wie kalte Kontakte einen näherungsweise gleichen Temperaturgang unter schnellen Umgebungstemperaturänderungen durchlaufen. "Schnell" bedeutet hier, dass die Temperaturänderung schneller erfolgt als wegen der thermischen Zeitkonstante des Sensorelements Wärmemenge abgeführt werden kann. Dies kann dann zwar durchaus zu Signaländerungen im Nutzsignal führen. Aber jedenfalls erfahren die einzelnen wärmeempfindlichen Bereiche den "thermischen Schock" gleichzeitig, sodass die Beeinflussung durch dynamische Effekte nicht über einen längeren Zeitraum verschmiert ist, sondern in einem kurzen Zeitraum stattfindet und dann auch bald wieder abgeklungen ist.

Zum Ausgleich thermischer Unsymmetrien wie oben angesprochen kann statt der Positionswahl der wärmeempfindlichen Flächen oder zusätzlich hierzu auch die Positionierung und Dimensionierung der Beeinflussungsflächen selbst gestaltet werden. Zur Unterdrückung der Wärmeleitung in Beeinflussungsflächen können diese Wärmeleitungsbarrieren aufweisen, beispielsweise in Form von schlitzförmigen Unterbrechungen, die sich vorzugsweise in etwa rechtwinklig (> 60°) zum Temperaturgradienten erstrecken.

Es können außerdem Beeinflussungsflächengeometrien vorgesehen sein, die die oben beschriebenen thermischen Unsymmetrien ausgleichen. Beispielsweise kann vorgesehen sein, eine Reflexionsfläche bis nahe an die warmen Bereiche heranzuführen, sodass die gute Wärmeleitung der Reflexionsflächen dazu verwendet wird, Wärme, wie sie auch von den kalten Bereichen verspürt wird, zumindest bis nahe an die warmen Enden heranzuführen, um die Unsymmetrien zu verringern.

Es können auch Ausgleichsflächen 8 vorgesehen sein, die beispielsweise der gezielten Wärmezuführung oder Wärmeabfuhr zu Kompensationszwecken dienen. In Fig. 2a ist beispielsweise eine Wärmeleitungsschicht 8 gezeigt, die auch unter der Absorptionsschicht 5a liegen kann. Auf diese Weise sind gezielte Wärmeflüsse möglich, die einer Symmetrierung der sich aus Temperaturgradienten ergebenden Wärmeflüsse wegen Umgebungstemperaturänderungen vergleichmäßigen. Die Ausgleichsschichten können eine Dicke unter 10 µm haben. Sie können ein oder mehrere metallische Materialien aufweisen. Ihre thermische Leitfähigkeit kann hoch sein und vorzugsweise über 10, weiter vorzugsweise über 50 W/m/K liegen.

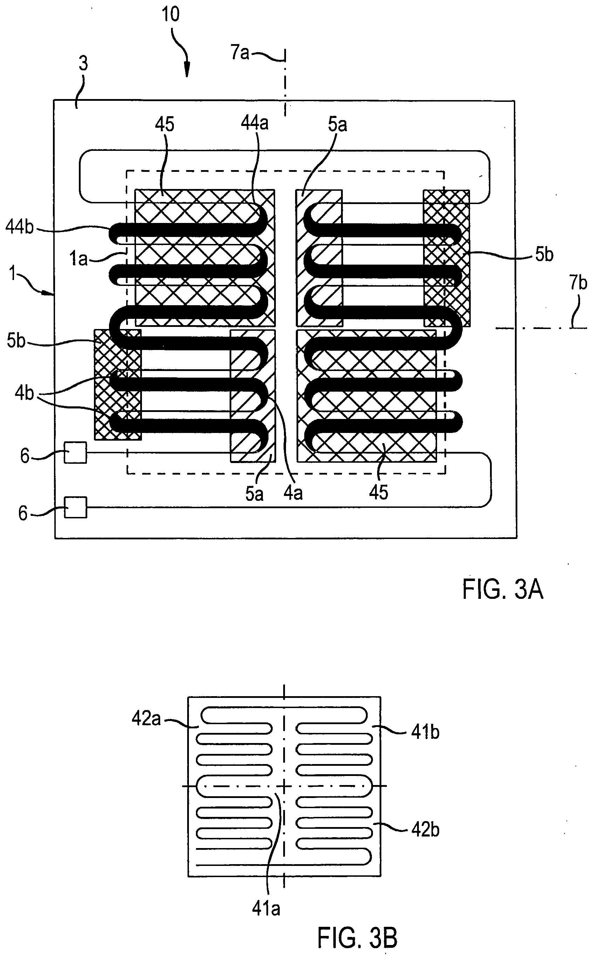

Fig. 3 zeigt in Draufsicht eine weitere Ausführungsform eines Sensorelements. Gleiche Bezugsziffern wie in den früheren Zeichnungen bedeuten gleiche Komponenten. 1a symbolisiert den Innenrand des Rahmens 1, über dem die Membran 3 gespannt ist. Man erkennt, dass in dieser Ausführungsform diejenigen Kontakte, die in der Fig. 1 den kalten Kontakten entsprechen, über dem Rahmen 1 liegen und nicht über der vom Rahmen 1 eingeschlossenen Grube. Auch die Ausführungsform der Fig. 3 kann aber dahingehend abgewandelt werden, dass alle Kontakte über der Grube liegen.

Die Fläche des Sensorelements weist unterschiedliche Regionen 41a, 41b, 42a, 42b auf, die jeweils elektrische Signale hervorrufen. Es gibt eine oder mehrere erste Regionen 41a, 41b, die der Erzeugung eines elektrischen Ausgangssignals entsprechend der zu erfassenden elektromagnetischen Strahlung dienen. Sie können Thermopiles mit warmen und kalten Kontakten 4a, 4b aufweisen, wobei Absorptions- und ggf. Reflexionsschichten 5a, 5b vorgesehen sein können. Die zweiten Regionen 42a, 42b sind für die zu erfassende elektromagnetische Strahlung unempfindlich oder jedenfalls unempfindlicher als die ersten Regionen. Ihr elektrisches Ausgangssignal hat aber einen Temperaturgang, der qualitativ und/oder bereichsweise denjenigen des Signals aus den ersten Regionen 41 gleicht.

Die Signale aus den ersten Regionen werden mit den elektrischen Signalen aus den zweiten Regionen verknüpft, vorzugsweise werden sie im Gegentakt miteinander verschaltet, also bei Spannungssignalen seriell so, dass die Temperaturgänge der Signale aus den ersten Regionen entgegengesetzt zu denjenigen der Signale aus den zweiten Regionen laufen. Die Temperaturgänge heben sich dann ganz oder teilweise (je nach Übereinstimmungsgrad) auf. Das der Strahlung entsprechende Signal, das den ersten Regionen entspringt, wird von dem schwächeren bzw. nicht vorhandenen Strahlungssignal aus den zweiten Regionen nur geringfügig oder gar nicht kompensiert, sodass als Gesamtergebnis ein um den Temperaturgang kompensiertes Strahlungssignal vorliegt.

Vorzugsweise weisen sowohl die ersten als auch die zweiten Regionen jeweils einen oder mehrere wärmeempfindliche Bereiche 4a, 4b, 44a, 44b auf. In den zweiten Regionen kann die verringerte Strahlungsempfindlichkeit dadurch erreicht werden, dass mehrere oder alle der wärmeempfindlichen Bereiche 44a, 44b entweder über dem Rahmen 1 liegen, sodass sie thermisch gut an die Umgebung angekoppelt und gegenüber thermischer Erwärmung auf Grund der einfallenden Strahlung kurzgeschlossen sind, oder dass Erwärmung wegen Strahlungsabsorption bei ihnen vermieden wird, indem sie geeignet abgedeckt sind, beispielsweise durch eine Reflexionsschicht.

Fig. 3A zeigt für die zweiten Regionen 42a, 42b beide Möglichkeiten in Kombination: Ein Teil der wärmeempfindlichen Bereiche 44b (entsprechend den üblicherweise als "kalte Kontakte" bezeichneten Materialübergängen) liegt über dem Rahmen 1, und der andere Teil der Kontakte 44b (entsprechend den üblicherweise als "warme Kontakte" bezeichneten Materialübergängen) liegt unter den kreuzschraffierten Abdeckungen 45, die Strahlungsabsorption verhindern, beispielsweise indem sie reflektierend ausgebildet sind. Auf diese Weise kann sichergestellt werden, dass die Strahlungsabhängigkeit des Ausgangssignals der zweiten Regionen gering bzw. praktisch Null ist. Es bleibt dann nur die Abhängigkeit des Ausgangssignals der zweiten Regionen von der Umgebungstemperatur. Dieses umgebungstemperaturabhängige Signal kann dann gegen das Ausgangssignal der ersten Regionen geschaltet werden, was durch das Aneinanderleigen dicher Markierungen beim Übergang der Mäander von der ersten in die zweite Region angedeutet ist, sodass das strahlungsabhängige Signal aus den ersten Regionen mehr oder minder unbeeinflusst bleibt, während die umgebungstemperaturabhängigen Signale aus den ersten und den zweiten Regionen sich gegenseitig mehr oder minder aufheben. Als Ergebnis entsteht an den Anschlüssen 6 ein um den Temperaturgang kompensiertes Ausgangssignal.

In gewisser Weise können die zweiten Regionen dieser Ausführungsform als Temperaturreferenzelement angesehen werden, jedoch mit den ergänzenden Eigenschaften, dass das Ausgangssignal unmittelbar zur Kompensation verwendet wird. Natürlich kann es aber auch über eigene Anschlüsse abgreifbar sein und für andere Zwecke zur Verfügung stehen.

In einer bevorzugten Ausführungsform weisen erste Region und zweite Region je einen oder mehrere strahlungsempfindliche Bereiche 4a, b, 44a, b auf, die paarweise symmetrisch zueinander angeordnet sind. Fig. 3A zeigt insoweit symmetrische Anordnungen. Sie sind symmetrisch sowohl zur vertikalen Symmetrieachse 7a als auch zur horizontalen Symmetrieachse 7b. Die Symmetrie kann dabei die symmetrische Anordnung bezüglich des Rahmens 1 und der Membran 3 mit einschließen, in Fig. 3A ist dies ebenfalls schematisch gewahrt. Die symmetrische Anordnung hat zur Folge, dass die wärmeempfindlichen Bereiche sowohl der ersten Regionen als auch der zweiten Regionen in praktisch identischer Weise Umgebungstemperaturänderungen ausgesetzt werden, sodass sie auch praktisch identische Temperaturgänge liefern. Die Symmetrie der Anordnung dient also der Symmetrierung der Temperaturgänge der Signale aus den ersten und zweiten Regionen.

In den ersten Regionen 41a, 41b der Fig. 3A sind die kalten und warmen Kontakte 4b, 4a in schon beschriebener Weise von Reflexionsflächen 5b bzw. Absorptionsflächen 5a überdeckt. Die Reflexionsflächen 5b können entfallen, wenn die kalten Kontakte 4b über dem Rahmen angeordnet sind, weil dann die kalten Kontakte zur thermischen Masse der Umgebung hin praktisch kurzgeschlossen sind. Wenn sich die kalten Kontakte der strahlungsempfindlichen Bereiche der ersten Regionen über der Grube befinden, können sich aus Symmetriegründen die kalten Kontakte 44b in den zweiten Regionen auch über der Grube befinden. Sie sollten dann von der Abdeckung 45 überdeckt sein, um Erwärmung wegen Strahlungsabsorption und damit ein strahlungsabhängiges Ausgangssignal aus den zweiten Regionen zu verhindern.

Fig. 3A und 3B zeigen jeweils zwei erste und zwei zweite Regionen. Je nach Anwendung können aber auch beispielsweise nur eine erste und eine zweite Region vorgesehen sein.

Die wärmeempfindlichen Bereiche 4a, b, 44 a, b können Kontaktstellen geeigneter unterschiedlicher leitender oder halbleitender Materialien sein, wie sie in der Fig. 1 durch übereinanderliegende Bahnen und in Fig. 3 durch dicke bzw. dünne Striche angedeutet sind. Die zwei Materialien können z. B. Al und Poly-Si sein. Sie können Thermopiles bilden, insbesondere in Verbindung mit Absorptions- und Reflexionsschichten und unterschiedlichen Ankopplungen an bzw. Isolation gegen thermische Massen bzw. Senken. Bei Einelementsensoren wie auch bei Mehrelementsensoren können gegebenenfalls auch komplexere Schaltungen für Multiplexierung, gegebenenfalls Signal- und Impedanzwandlung und Ähnliches vorgesehen sein. Allgemein können dementsprechend im Gehäuse des Sensors auch nicht gezeigte weitergehende Komponenten vorgesehen sein, etwa
- Analog-Digital-Wandler für digitale Signalhandhabung und - ausgabe, und/oder
- Speicher insbesondere für Messwerte, Zwischenergebnisse und/oder für vorab ermittelte, eingespeicherte und nach extern zu übertragende und dort zu verwendende Korrekturdaten für ein oder mehrere Sensorelemente, und/oder
- eine Signalformungs- oder Kalibrierungsschaltung, die vorzugsweise über die Anschlüsse einstellbar ist, z. B. für Linearisierung und/oder Impedanzwandlung und/oder Verstärkung, und/oder

- Signalprozessor für Signalverarbeitungen (z. B. Umgebungstemperaturkompensation, Mustererkennung bei Ortsauflösung) und/oder
- Parallel-Seriell-Wandlung insbesondere bei Mehrelementsensoren, und/oder
- Signalformung und/oder Signalverarbeitung und/oder Signalausgabe für das Referenzelement 37, und/oder
- Datenschnittstelle von und nach extern, insbesondere digital, z. B. I²C-Schnittstelle, und/oder
- eine geeignete Anzahl von Anschlüssen.

Der Sensor kann in seinen Außenabmessungen einem standardisierten Gehäuse entsprechen, bspw. einem TO5-Gehäuse.

## Patentansprüche

1. Sensorelement (10) zum Erfassen elektromagnetischer Strahlung insbesondere im IR-Bereich, mit
einem Träger, der einen Rahmen (1) mit einer von einer Membran (3) überspannten Öffnung (2) aufweist,
einem Thermopile mit wärmeempfindlichen Bereichen (4a, 4b) in Form von warmen Kontakten (4a) und kalten Kontakten (4b), die auf der Membran über der Öffnung des Trägers (1-3) angeordnet sind, und
einer oder mehreren Beeinflussungsschichten (5a, 5b) zur Beeinflussung der Absorption und/oder Reflexion der zu erfassenden elektromagnetischen Strahlung,
**dadurch gekennzeichnet, dass**
die warmen und kalten Kontakte (4a, 4b) auf der Membran (3) über der Öffnung (2) des Trägers so angeordnet sind, dass die kalten Kontakte (4b) auf der Membran in größerem mittleren Abstand vom Rahmen (1) als die warmen Kontakte (4a) angebracht sind, so dass die warmen und kalten Kontakte (4a, 4b) unsymmetrisch bezüglich einer Symmetrieachse (7a, 7b) oder eines Symmetriepunktes (7c) der Öffnung des Rahmens (1) angeordnet sind, wobei die unsymmetrische Anordnung dem Ausgleich unsymmetrischer thermischer Eigenschaften des Sensorelements (1) dient.

2. Sensorelement (10) nach Anspruch 1, **dadurch gekennzeichnet, dass**
die Beeinflussungsschichten (5a, 5b) eine Absorptionsschicht (5a) über einem oder mehreren warmen Kontakten (4a) und/oder eine Reflexionsschicht (5b) über einem oder mehren kalten Kontakten (4b) aufweisen, wobei
die Anordnung der wärmeempfindlichen Bereiche nach Maßgabe von Wärmekapazität und/oder Wärmeleitfähigkeit und/oder Abstrahlvermögen einer oder mehrerer der Beeinflussungsschichten erfolgt.

3. Sensorelement (10) nach einem oder mehreren der vorherigen Ansprüche, **dadurch gekennzeichnet, dass** wärmeempfindliche Bereiche auf Isothermen angeordnet sind.

4. Sensorelement (10) nach einem oder mehreren der vorherigen Ansprüche, **gekennzeichnet durch** Ausgleichsschichten (8) zum Ausgleichen thermischer Auswirkungen der Beeinflussungsschichten, wobei die Anordnung der wärmeempfindlichen Bereiche auch nach Maßgabe von Wärmekapazität und/oder Wärmeleitfähigkeit und/oder Abstrahlvermögen und/oder Absorptionsvermögen und/oder Reflexionsvermögen einer oder mehrerer der Beeinflussungsschichten der Ausgleichsschichten erfolgt.

5. Sensorelement (10) nach einem oder mehreren der vorherigen Ansprüche, **gekennzeichnet durch** eine Wärmeleitungsbarriere in einer Beeinflussungsschicht.

6. Sensorelement (10) nach Anspruch 5, **dadurch gekennzeichnet, dass** die Wärmeleitungsbarriere ein Spalt in einer Beeinflussungsschicht ist.

7. Sensorelement (10) nach einem oder mehreren der vorherigen Ansprüche, **dadurch gekennzeichnet, dass** die wärmeempfindlichen Bereiche auf einer Isotherme, die sich bei Temperaturausgleichsvorgängen einstellt, angeordnet sind.

8. Sensorelement (10) nach einem oder mehreren der vorherigen Ansprüche,
**dadurch gekennzeichnet, dass**
die Beeinflussungsschichten nach Maßgabe von thermischen Eigenschaften der Sensorelemente und/oder des Trägers und/oder der Beeinflussungsschichten auf dem Träger positioniert und/oder dimensioniert sind.

9. Sensorelement (10) nach einem oder mehreren der vorherigen Ansprüche, mit
mindestens einer ersten Regionen (41a, b) auf einem Träger (1-3), die der Erzeugung eines elektrischen Ausgangssignals entsprechend der zu erfassenden elektromagnetischen Strahlung dient und wärmeempfindliche Bereiche (4a, 4b) aufweist, und
mindestens einer zweiten Regionen (42a, b) zur Erzeugung eines elektrischen Ausgangssignals, die wärmeempfindliche Bereiche (44a, b) aufweist,
**dadurch gekennzeichnet, daß**
der Träger (1-3) einen Rahmen (1) und eine Membran (3) über einer Öffnung (2) des Rahmens aufweist,
die wärmeempfindlichen Bereiche (4a, b, 44a, b) warme und kalte Kontakte aufweisen, die alle auf der Membran über der Öffnung des Rahmens liegen, und
die zweite Region (42a, b) für die zu erfassende elektromagnetische Strahlung unempfindlicher als die ersten Region (41a, b) ist und ihr elektrisches Ausgangssignal mit demjenigen der ersten Region verknüpft wird.

10. Sensorelement (10) nach Anspruch 9, **dadurch gekennzeichnet, daß** eine erste Region (41) und/oder eine zweite Region (42) ein oder mehrere wärmeempfindliche Bereiche (4a, b; 44a, b) aufweist.

11. Sensorelement (10) nach Anspruch 10, **dadurch gekennzeichnet, daß** eine erste Region (41) und eine zweite Region (42) je einen oder mehrere wärmeempfindliche Bereiche (4a, b, 44a, b) aufweisen, die paarweise symmetrisch zueinander angeordnet sind.

12. Sensorelement (10) nach einem oder mehreren der Ansprüche 9 bis 11, **dadurch gekennzeichnet, daß** die Ausgangssignale einer ersten und einer zweiten Region gegentaktverschaltet werden.

13. Sensorelement (10) nach einem oder mehreren der Ansprüche 9 bis 12, **dadurch gekennzeichnet, daß** über wärmeempfindlichen Bereichen in einer zweiten Region (42a, b) eine Abdeckung (45) vorgesehen ist, die die Absorption von Wärmestrahlung verringert oder verhindert.

14. Sensorelement (10) nach einem oder mehreren der Ansprüche 9 bis 13, **dadurch gekennzeichnet, daß** die zweiten Regionen einen Temperaturgang haben, der in etwa demjenigen der ersten Regionen entspricht.

15. Sensor mit einem Sensorelement (10) nach einem oder mehreren der vorherigen Ansprüche.

## Claims

1. Sensor element (10) for detecting electromagnetic radiation, in particular in the IR range, comprising
a support comprising a frame (1) having an opening (2) spanned with a membrane (3),
a thermopile having thermosensitive areas (4a, 4b) in the form of warm contacts (4a) and cold contacts (4b) provided on the membrane over the opening of the support (1-3), and
one or more influencing layers (5a, 5b) for influencing the absorption and/or reflection of the radiation to be detected,
**characterised in that**
the warm and cold contacts (4a, 4b) on the membrane (3) over the opening (2) of the support are arranged such that the cold contacts (4b) are placed on the membrane in a larger mean distance from the support (1) than the warm contacts (4a), so that the warm and cold contacts (4a, 4b) are arranged asymmetrically relative to a symmetry axis (7a, 7b) or a point of symmetry (7c) of the opening of the frame (1), wherein the asymmetrical arrangement serves for balancing asymmetrical thermal properties of the sensor element (1).

2. Sensor element (10) according to claim 1, **characterised in that**
the influencing layers (5a, 5b) comprise an absorption layer (5a) over one or more warm contacts (4a) and/or a reflection layer (5b) over one or more cold contacts (4b),
wherein the placement of the thermosensitive areas is made in accordance with the heat capacity and/or the thermal conductivity and/or the emission capability of one or more of the influencing layers.

3. Sensor element (10) according to one or more of the preceding claims, **characterised in that** thermosensitive areas are arranged on isotherms.

4. Sensor element (10) according to one or more of the preceding claims, **characterised by** balancing layers (8) for balancing thermal effects of the influencing layers, wherein the placement of the thermosensitive areas is made also in accordance with the heat capacity and/or the thermal conductivity and/or the emission capability and/or the absorption capacity and/or the reflection capacity of one or more of the influencing layers.

5. Sensor element (10) according to one or more of the preceding claims, **characterised by** a thermal conduction barrier in an influencing layer.

6. Sensor element (10) according to claim 5, **characterised in that** the thermal conduction barrier is a slit in an influencing layer.

7. Sensor element (10) according to one or more of the preceding claims, **characterised in that** the thermosensitive areas are arranged on an isotherm arising upon temperature balancing processes.

8. Sensor element (10) according to one or more of the preceding claims,
**characterised in that**
the influencing layers are positioned or dimensioned on the support in accordance with the thermal properties of the sensor elements and/or the support and/or the influencing layers.

9. Sensor element (10) according to one or more of the preceding claims, comprising
at least one first region (41a, b) on a support (1-3), serving for generating an electric output signal according to the electromagnetic radiation to be detected, and comprising thermosensitive areas (4a, 4b), and
at least one second region (42a, b) for generating an electric output signal, which comprises thermosensitive areas (44a, b),
**characterised in that**
the support (1-3) comprises a frame (1) and a membrane (3) over an opening (2) of the frame,
the thermosensitive areas (4a, b, 44a, b) comprise warm and cold contacts, all of them being located on the membrane over the opening of the frame, and
the second region (42a, b) is less sensitive to the electromagnetic radiation to be detected than the first region (41a, b), the electric output signal thereof being linked with that of the first region.

10. Sensor element (10) according to claim 9, **characterised in that** a first region (41) and/or a second region (42) comprises one or more thermosensitive areas (4a, b; 44a, b).

11. Sensor element (10) according to claim 10, **characterised in that** a first region (41) and a second region (42) each comprise one or more thermosensitive areas (4a, b, 44a, b) being arranged in pairs symmetrical to each other.

12. Sensor element (10) according to one or more of claims 9 to 11, **characterised in that** the output signals of a first region and a second region are connected in push-pull arrangement.

13. Sensor element (10) according to one or more of claims 9 to 12, **characterised in that** a cover (45) is provided over thermosensitive areas in a second region (42a, b), preventing or prohibiting the absorption of thermal radiation.

14. Sensor element (10) according to one or more of claims 9 to 13, **characterised in that** the second regions have a temperature response approximately corresponding to that of the first regions.

15. Sensor comprising a sensor element (10) according to one or more of the preceding claims.

## Revendications

1. Élément capteur (10) destiné à détecter un rayonnement électromagnétique en particulier dans le domaine IR, comprenant
un support présentant un cadre (1) avec un orifice (2) sur lequel est tendue une membrane (3),
une thermopile avec des zones de sensibilité à la chaleur (4a, 4b) sous la forme de contacts chauds (4a) et de contacts froids (4b) disposés sur la membrane recouvrant l'orifice du support (1-3) et
une ou plusieurs couches d'influence (5a, 5b) permettant d'influencer l'absorption et/ou la réflexion du rayonnement électromagnétique à détecter,
**caractérisé en ce que**
les contacts chauds et froids (4a, 4b) placés sur la membrane (3) recouvrant l'orifice (2) du support sont agencés de façon à ce que les contacts froids (4b) sur la membrane se trouvent à une distance intermédiaire plus grande par rapport au cadre (1) que les contacts chauds (4a), de sorte que les contacts chauds et froids (4a, 4b) sont disposés de façon asymétrique par rapport à un axe de symétrie (7a, 7b) ou un point de symétrie (7c) de l'orifice du cadre (1), l'agencement asymétrique servant à compenser les caractéristiques thermiques asymétriques de l'élément capteur (1).

2. Élément capteur (10) selon la revendication 1, **caractérisé en ce que**
les couches d'influence (5a, 5b) présentent une couche absorbante (5a) sur un ou plusieurs contacts chauds (4a) et/ou une couche réfléchissante (5b) sur un ou plusieurs contacts froids (4b),
l'agencement des zones de sensibilité à la chaleur s'effectuant selon la capacité thermique et/ou la conductivité thermique et/ou le pouvoir de rayonnement d'une ou de plusieurs couches d'influence.

3. Élément capteur (10) selon une ou plusieurs des revendications précédentes, **caractérisé en ce que** les zones de sensibilité à la chaleur sont placés sur des isothermes.

4. Élément capteur (10) selon une ou plusieurs des revendications précédentes, **caractérisé par** la présence de couches de compensation (8) destinées à compenser les effets thermiques des couches d'influence, l'agencement des zones de sensibilité à la chaleur s'effectuant également selon la capacité thermique et/ou la conductivité thermique et/ou le pouvoir de rayonnement et/ou le pouvoir d'absorption et/ou le pouvoir de réflexion d'une ou de plusieurs couches d'influence des couches de compensation.

5. Élément capteur (10) selon une ou plusieurs des revendications précédentes, **caractérisé par** la présence d'une barrière de conduction thermique dans une couche d'influence.

6. Élément capteur (10) selon la revendication 5, **caractérisé en ce que** la barrière de conduction thermique est une fente dans une couche d'influence.

7. Élément capteur (10) selon une ou plusieurs des revendications précédentes, **caractérisé en ce que** les zones de sensibilité à la chaleur sont placées sur un isotherme qui se règle en cas d'opérations de compensation de la température.

8. Élément capteur (10) selon une ou plusieurs des revendications précédentes,
**caractérisé en ce que**
les couches d'influence sont dimensionnées et/ou positionnées sur le support selon les caractéristiques thermiques des éléments capteurs et/ou du support et/ou des couches d'influence.

9. Élément capteur (10) selon une ou plusieurs des revendications précédentes, comprenant
au moins une première région (41a, b) sur un support (1-3) qui permet de générer un signal électrique de sortie conformément au rayonnement électromagnétique à détecter et qui présente des zones de sensibilité à la chaleur, et
au moins une deuxième région (42a, b) qui permet de générer un signal électrique de sortie et qui présente des zones de sensibilité à la chaleur (44a, b),
**caractérisé en ce que**
le support (1-3) présente un cadre (1) et une membrane (3) recouvrant un orifice (2) du cadre,
les zones de sensibilité à la chaleur (4a, b, 44a, b) présentent des contacts chauds et froids qui reposent tous sur la membrane recouvrant l'orifice du cadre, et
la deuxième région (42a, b) destinée à la détection du rayonnement électromagnétique est plus sensible que la première région (41a, b) et son signal électrique de sortie est relié à celui de la première région.

10. Élément capteur (10) selon la revendication 9, **caractérisé en ce qu'**une première région (41) et/ou une deuxième région (42) présentent une ou plusieurs zones de sensibilité à la chaleur (4a, b ; 44a, b).

11. Élément capteur (10) selon la revendication 10, **caractérisé en ce qu'**une première région (41) et/ou une deuxième région (42) présentent chacune une ou plusieurs zones de sensibilité à la chaleur (4a, b, 44a, b) agencées de manière symétrique par paire.

12. Élément capteur (10) selon une ou plusieurs des revendications 9 à 11,
**caractérisé en ce que** les signaux de sortie d'une première et d'une deuxième région sont connectés en push-pull.

13. Élément capteur (10) selon une ou plusieurs des revendications 9 à 12,
**caractérisé en ce qu'**un cache de protection (45) est prévu sur les zones de sensibilité à la chaleur dans une deuxième région (42a,b) afin de réduire ou d'empêcher l'absorption du rayonnement thermique.

14. Élément capteur (10) selon une ou plusieurs des revendications 9 à 13,
**caractérisé en ce que** les deuxièmes régions présentent un conduit de température correspondant à peu près à celui des premières régions.

15. Capteur comportant un élément capteur (10) selon une ou plusieurs des revendications précédentes.
